(19) Europäisches Patentamt
European Patent Office
Office européen des brevets

(11) **EP 1 453 045 A2**

(12) **EUROPEAN PATENT APPLICATION**

(43) Date of publication:
**01.09.2004 Bulletin 2004/36**

(51) Int Cl.7: **G11B 7/12**, G11B 7/135

(21) Application number: **04251140.2**

(22) Date of filing: **27.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL HR LT LV MK**

(30) Priority: **28.02.2003 JP 2003052831**

(71) Applicant: **MATSUSHITA ELECTRIC INDUSTRIAL CO., LTD.**
**Kadoma-shi, Osaka 571-8501 (JP)**

(72) Inventors:
• **Asada, Junichi**
  **Kobe-shi, Hyogo 658-0015 (JP)**
• **Nagashima, Kenji**
  **Takatsuki-shi, Osaka 569-0821 (JP)**
• **Nishiwaki, Seiji**
  **Kobe-shi, Hyogo 658-0064 (JP)**

(74) Representative: **Tothill, John Paul**
**Frank B. Dehn & Co.**
**179 Queen Victoria Street**
**London EC4V 4EL (GB)**

(54) **Optical pickup**

(57)    An optical pickup with a simple configuration can be provided, by which an amount of astigmatism generated by a temperature change can be suppressed, recording and reproducing qualities can be maintained stably and its light efficiency can be enhanced. The optical pickup includes a mirror (6) that is secured to a supporter (13) so as to generate astigmatism due to deformation caused by a temperature change. This deformation caused by the temperature change is generated due to a difference in linear expansion coefficient between the mirror (6) that generates the astigmatism and the supporter (13). This astigmatism is equal in size and is opposite in polarity to astigmatism that occurs when the parallel light passes through the beam shaping element (3). Here, the parallel light has a phase distribution generated by a difference between: (a) an amount of a change in optical path length between a luminous point of the light source (1) and a principal point of the collimator lens (2), which results from thermal expansion or thermal contraction of a structure including the light source (1) and the collimator lens (2) due to the temperature change; and (b) an amount of a change in focal length of the collimator lens (2).

FIG. 1

EP 1 453 045 A2

## Description

The present invention relates to an optical pickup device that records and reproduces information optically with respect to an optical disc.

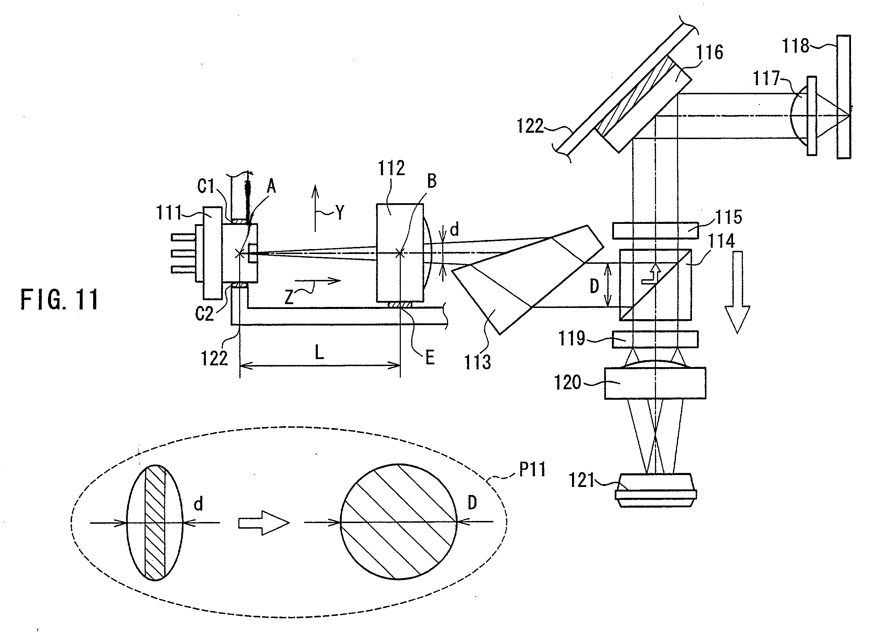

Referring to Fig. 11, conventional technology will be described below. Fig. 11 shows a configuration of a conventional optical pickup as one example. Light emitted from a semiconductor laser as a light source 111 is divergent light having an ellipse-shaped intensity distribution with an ellipticity of 1 : 2.5 (Y direction is along a minor axis of the ellipse and X direction normal to the surface of the sheet is along a major axis of the ellipse). This divergent light, i.e., the light having a spherical phase wavefront, is collected by a collimator lens 112 that is arranged so that its focal position corresponds to a luminous point, and is converted into parallel light, i.e., the light having a planar phase wavefront.

Thereafter, the light passes through a beam shaping prism 113, so that a beam diameter of the light is magnified only in the Y direction. Angles of incident and outgoing planes of the prism with respect to the light beam are set appropriately so that a diameter d in the minor axis direction can be magnified by about 2.5 times to be a diameter D, thus obtaining a circular beam whose beam cross-section has a light intensity distribution with substantially rotational symmetry.

The thus shaped light beam is reflected by a polarization beam splitter 114 so that its optical path is bent, and passes through a quarter-wave plate 115 so that linearly polarized light is changed to circularly polarized light. Subsequently, the optical path of the light is bent by a rising mirror 116 so as to be collected onto an optical disc 118 through an objective lens 117.

The light reflected by the optical disc 118 travels in the reverse order of the outgoing path by way of the objective lens 117 and the rising mirror 116 to reach the quarter-wave plate 115. The quarter-wave plate 115 changes the light to be linearly polarized light orthogonal to the outgoing path, so that the light passes through the polarized beam splitter 114 at this time. This transmitted light is branched into several parts of light by a hologram element 119, and the several parts of light are collected and incident on a photodetector 121 through a detecting lens 120, from which control signals such as for focusing and tracking, and RF signals can be obtained.

Although these optical components are represented at their very limited portions for the simplification of the drawing, these components are disposed and attached to an optical base 122 made of metal or resin. More specifically, the objective lens 117 is mounted on an actuator for providing focusing and tracking operations, and the actuator is attached to the optical base 122. Assuming that the optical axis is on the Z axis, the light source 111 is bonded and secured to the optical base 122 at points C1 and C2 that correspond to the luminous point A on the Z coordinates. The collimator lens 122 is bonded and secured to the optical base 122 at a point E that corresponds to its principal point B on the Z coordinates.

Furthermore, the beam shaping prism 113 and the quarter-wave plate 115 are bonded and secured to the optical base 122 at their entire side faces (the face corresponding to the sheet surface and contacting with the optical base 122), and the rising mirror 116 is bonded and secured to the optical base 122 at the entire face on an opposite side of the reflecting face.

Generally, unlike an optical pickup exclusively used for reproducing information from an optical disc, a focal spot with high light intensity should be formed for an optical pickup used for recording information on an optical disc so as to form marks on a recoding surface. To this end, a high-power semiconductor laser is used as the light source. However, as a higher power laser requires a larger driving electric power, problems such as heat generation and power consumption occur. In addition, in general, the cost of a laser increases with its power. Therefore, in order to reduce the driving electric power and obtain a desired power emitted from a lens with a minimum laser output, it is desirable to increase the light efficiency of the optical system of the pickup to the maximum.

Meanwhile, when recording/reproducing is carried out with respect to a high-density disc, a light spot is required to be narrowed as small as possible using an objective lens. To this end, a numerical aperture (generally referred to as NA) of the objective lens should be made larger and a light intensity at an aperture end (generally referred to as rim intensity) should be made as high as possible. Generally, an intensity distribution of the light emitted from a semiconductor laser assumes an ellipse shape. When the light is allowed to enter the objective lens while keeping this shape, its light spot becomes smaller. In other words, in order to ensure the rim intensity, the light only in the vicinity of the center of the ellipse-shaped intensity distribution can be used, which means a large amount of light is rejected at the aperture of the objective lens. This causes a decrease in the light efficiency of the optical system.

To avoid this, in an optical system of the pickup used for recording-type optical discs, a method of beam shaping often is adopted. That is to say, the light emitted from a semiconductor laser has an ellipse-shaped intensity distribution in cross-section, where a ratio of its minor axis to major axis is about 1 : 2.5. Such light is magnified only in the minor axis of the beam cross-section by about 2.5 times using the wedge-shaped prism 113 having a pair of planes that are not parallel with each other as shown in Fig. 11, thus obtaining a light beam whose cross-section has a circular intensity distribution with substantially rotational symmetry. If the beam shaping is not conducted, a considerably amount of light in the major axis of the elliptical distribution is rejected. On the other hand, when the beam shaping is conducted so that the light has a circular distribution, a required rim intensity can be ensured and an amount of light rejected at the aperture of the objective lens can be decreased by designing a focal length of a collimator lens and a NA of an objective lens to have appropriate values. As a result, an optical system with high light efficiency can be obtained.

As a technology concerning the above-stated beam shaping, there is one described in JP H11(1999)-53754 A. In addition, as another method for suppressing astigmatism, there is a method of avoiding a change in optical relationship concerning image-formation by compensating for a change in focal position due to the thermal expansion of a lens caused by a temperature change of the optical pickup with the thermal expansion of a supporter of the lens.

There is still another method of avoiding a change in wavelength of a light source with respect to a temperature change of an optical pickup by attaching a cooling device to the light source, while avoiding a change in optical relationship concerning image-formation by compensating for a change in focal position due to the thermal expansion of a lens with the thermal expansion of a supporter of the lens (See JP H06(1994)-79915 A).

However, such optical systems for providing beam shaping have the following problems. That is, when a temperature surrounding the optical pickup is changed, a length L between the luminous point A and the principal point B of the collimator lens 112 is changed due to the thermal expansion of the optical base 122 to which the light source 111 and the collimator lens 112 are attached. Assuming that a focal length does not change with the temperature, the collimated light is changed from a plane wave to a spherical wave by the degree corresponding to the change of this length.

In the case where a plane wave passes through the beam shaping prism 113, the light is refracted to pass through the prism while maintaining the plane wave. On the other hand, in the case where a spherical wave passes through the beam shaping prism made up of planes that are not parallel with each other, a difference is produced in degree of the phase of the light to progress between the beam shaping direction (Y direction) and the direction orthogonal to that (X direction (direction normal to the surface of the sheet)). As a result, a curvature of the spherical wave becomes different between the Y direction and the X direction. This means the generation of astigmatism.

Generally, if there is astigmatism in the optical system of an optical pickup, a focal spot becomes distorted on a disc, thus significantly degrading recording and reproducing qualities and reproducing qualities of address signals and the like. Especially, when defocusing of a focal point (a gap between the position of the focal point and the optical disc in the optical axis direction) occurs, astigmatism is generated in which the shape of a focal spot is elongated in a track direction and a direction orthogonal to that. This astigmatism adversely affects an adjacent track or degrades the resolution in the tracking direction, and therefore its influence on performance is significant. Normally, in the optical pickup used for recording/reproducing high-density signals with respect to DVDs or the like, its acceptable astigmatism is specially restricted to several $m\lambda$ to ten-odd $m\lambda$.

In an initial state of the optical pickup subjected to the assembly process (i.e., normally at room temperatures), this astigmatism is set in the best condition by making a fine adjustment of a length between the luminous point and the collimator lens, which is conducted in a state of the whole optical system being incorporated therein. However, when a temperature surrounding the optical pickup is changed as stated above, a deviation occurs from this state.

Normally, the following methods are available to cope with the change in the luminous point and the position of the collimator lens due to the temperature change. That is to say, while a relative length between the luminous point and the principal point of the collimator lens is changed due to the thermal expansion of the optical base in accordance with the temperature change, a wavelength of the light source also is changed in accordance with the temperature change, which generates a change in divergence of the lens, i.e., a change in refractive index due to the difference in wavelength. Also, a material of the lens itself changes in its refractive index due to heat, even for the same wavelength. As a result, the refractive conditions of the collimator lens are changed, thus changing the focal position of the lens. In other words, when a temperature is changed, a length between the luminous point and the principal point of the lens is changed, which contributes to the conversion of the light from the light source with a spherical wave into a plane wave, and concurrently the focal position of the collimator lens is changed.

By making use of this, the change in length between the luminous point and the collimator lens due to the heat deformation can be cancelled out with the change in focal length due to the temperature change by selecting appropriately a material of the lens (i.e., divergence characteristics and the degree of a change in refractive index due to heat). This allows the optical relationship concerning image-formation not to be changed even when the temperature surrounding it is changed, so as to keep the collimated light as a plane wave.

However, in the case of optical pickups mass-produced on a certain degree of scale, the degree of flexibility in materials of the base and the collimator lens is limited in view of the mass productivity and the cost. Furthermore, as for dimensions of an optical system (a focal length of a lens, an optical path length and an aperture of an objective lens), since optical components need to be arranged while giving the highest priority to lay out in a limited space and assign desired focal capabilities, the perfect design for compensating for a temperature change in the collimator lens cannot always be satisfied while giving a consideration to such arrangement. In other words, conventionally, it is difficult to satisfy a relationship such that a linear expansion amount of the base and a variation amount of the focal point of the collimator lens are always equal to each other.

Especially, in the case where a focal length of the collimator lens is large and a length between the light source and the collimator lens is large, or where a zinc material is used as a base material, which is excellent in processability and cost, there are no materials of the lens available that have a dispersion large enough to be commensurate with a large amount of relative displacement of a length between the luminous point and the principal point of the lens due to thermal expansion when a temperature is changed.

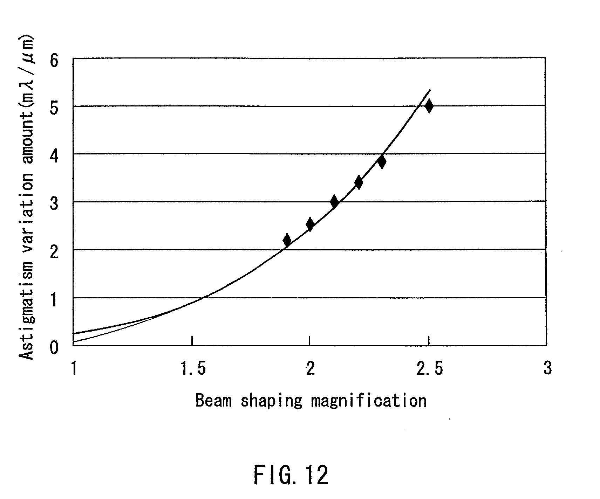

Fig. 12 shows a relationship between a magnification for beam shaping and an amount of astigmatism that is generated from a change in length between the luminous point and the collimator lens. As shown in Fig. 12, as a magnification for beam shaping is made larger, a variation sensitivity of the astigmatism becomes higher. That is to say, although the magnification for beam shaping of about 2.5 times is required for forming a beam with a circular intensity distribution in order to enhance the light efficiency to the maximum, such requirement has adverse effects so that an amount of astigmatism caused by a temperature change is likely to increase.

Therefore, when the beam shaping of a high magnification is attempted for enhancing the light efficiency in recent optical disc systems that record and reproduce at higher density signals, the above-stated slight discrepancy between a variation amount in relative positions of the light source and the collimator lens caused by thermal expansion of the base and a variation amount of a focal length of the collimator lens poses a problem in recording and reproducing qualities.

Even in the case of the device described in JP H06(1994)-79915 A, when the device is provided with the cooling device, there are problems such as an increase in cost and the device becoming larger as a whole.

Therefore, with the foregoing in mind, it is an object of the present invention to provide an optical pickup with a simple configuration, by which an amount of astigmatism generated by a change in environmental temperatures can be suppressed, recording and reproducing qualities can be maintained stably and its light efficiency is high, even when a deformation amount of a base due to heat and a variation amount of a focal point of a collimator lens are not equal to each other.

In order to achieve the above-stated object, a first optical pickup according to the present invention includes optical elements. Light from a light source travels via the optical elements so as to be collected on an information recording medium. The optical elements include: a collimator lens that collects divergent light from the light source so as to form parallel light; a beam shaping element that alters an intensity distribution of the parallel light in cross-section; and an objective lens that collects light passing through the beam shaping element onto the information recording medium. The optical elements include an optical element that is secured to a supporter so as to generate first astigmatism due to deformation caused by a temperature change, wherein the deformation caused by the temperature change is generated due to a difference in linear expansion coefficient between the optical element that generates the first astigmatism and the supporter. The first astigmatism is equal in size and is opposite in polarity to a second astigmatism that occurs when the parallel light passes through the beam shaping element, the parallel light having a phase distribution generated by a difference between: (a) an amount of a change in optical path length between a luminous point of the light source and a principal point of the collimator lens, which results from thermal expansion or thermal contraction of a structure including the light source and the collimator lens due to the temperature change; and (b) an amount of a change in focal length of the collimator lens.

A second optical pickup according to the present invention includes: a light source; a collimator lens that collects divergent light from the light source so as to form parallel light; a beam shaping element that alters an intensity distribution of the parallel light; an objective lens that collects light passing through the beam shaping element onto an information recording medium; and a parallel plate that is disposed between the light source and the collimator lens. An inclination angle of the parallel plate with respect to an optical axis is changed with a variation amount of temperature.

A third optical pickup according to the present invention includes: a light source; and a collimator lens that collects divergent light from the light source so as to form parallel light, whereby the light from the light source is collected onto an information recording medium. The light source and the collimator lens are attached to a base, and a change in optical relationship concerning image-formation, which is generated from: a change in optical path length between a luminous point of the light source and a principal point of the collimator lens due to a temperature change; and a change in focal length of the collimator lens, is compensated for with a shift of a relative position between the base and at least one of the light source and the collimator lens.

A fourth optical pickup according to the present invention includes: a light source; a collimator lens that collects divergent light from the light source so as to form parallel light; a beam shaping element that alters an intensity distribution of the parallel light; an objective lens that collects light passing through the beam shaping element onto an information recording medium; and a phase plate with concentric steps, the phase plate being disposed at a position before or after the collimator lens. The phase plate is designed so as to correct a phase distribution of light that is generated due to a temperature change in a structure including the light source and the collimator lens into a state before the light enters the beam shaping element to be converted back into a plane wave.

According to the present invention, an optical pickup with a simple configuration can be provided by which a difference between a change in optical path length between the light source and the collimator lens and a change in focal length of the collimator lens can be compensated for, so that stable recording/reproducing qualities can be maintained even when a temperature surrounding it is changed.

According to the first optical pickup of the present invention, the deformation of the optical element due to a temperature change allows astigmatism due to the temperature change to be eliminated, thus maintaining stable recording/reproducing qualities with a simple configuration.

According to the second optical pickup of the present invention, the change in inclination angle of the parallel plate allows astigmatism due to a temperature change to be eliminated, thus maintaining stable recording/reproducing qualities with a simple configuration.

According to the third optical pickup of the present invention, the shift of a position of the optical element due to a temperature change allows the change in optical relationship concerning image-formation deformation due to the temperature change to be suppressed, thus maintaining stable recording/reproducing qualities with a simple configuration.

According to the fourth optical pickup of the present invention, astigmatism due to a temperature change can be eliminated simply by adding a phase plate, thus maintaining stable recording/reproducing qualities with a simple configuration.

In the first optical pickup of the present invention, it is preferable that the first astigmatism is generated by utilizing the optical element generating the first astigmatism that has a difference in deformation amount between different directions when the temperature is changed. With this configuration, a difference can be generated in a progressing degree of the phase of the light between the different directions, and therefore this configuration is suitable to generate additional astigmatism for canceling out the second astigmatism.

In addition, it is preferable that the difference in deformation amount between the different directions is generated by making a size of a bonded surface where the optical element generating the first astigmatism is bonded to the supporter different between the different directions. As a result of this, astigmatism can be generated in accordance with a temperature change with a simple configuration.

In addition, it is preferable that the difference in deformation amount between the different directions is generated by forming separately provided bonded surfaces where the optical element generating the first astigmatism is bonded to the supporter so that a length between the separately provided bonded surfaces is made different from a size of the bonded surfaces in a direction perpendicular to a direction of the length. As a result of this, astigmatism can be generated in accordance with a temperature change with a simple configuration.

In addition, it is preferable that the difference in deformation amount between the different directions is generated by forming separately provided bonded surfaces where the optical element generating the first astigmatism is bonded to the supporter, the separately provided bonded surfaces being different in deformation amount in their height direction when the temperature is changed. With this configuration, astigmatism can be generated by making use of the change of the bonded surfaces in their height direction also, and therefore this is effective for generating greater astigmatism.

In addition, it is preferable that the different directions correspond to a beam shaping direction by the beam shaping element and a direction perpendicular to the beam shaping direction. With this configuration, astigmatism of a spherical wave generated due to a temperature change when the light passes through the beam shaping prism can be eliminated.

In addition, it is preferable that the optical element generating the first astigmatism is a mirror that is provided at a position before or after the parallel light passes through the beam shaping element. With this configuration, a component constituting the optical pickup can be used to generate additional astigmatism for eliminating the second astigmatism, and therefore the configuration can be simplified.

In addition, it is preferable that the optical element generating the first astigmatism is the beam shaping element. With this configuration, a component constituting the optical pickup can be used to generate additional astigmatism for eliminating the second astigmatism, and therefore the configuration can be simplified.

In addition, it is preferable that the optical element generating the first astigmatism is a plate made up of parallel planes or made up of non-parallel planes, which allow parallel light to pass through. With this configuration, when two light sources are used, a component constituting the optical pickup can be used to generate additional astigmatism for eliminating the second astigmatism, and therefore the configuration can be simplified.

In addition, it is preferable that there are a plurality optical elements that generate the first astigmatism, and each of the plurality of optical elements shares the generation of the first astigmatism. With this configuration, the amount of aberration to be generated can be distributed over the respective elements so as to make the compensation amount for each element smaller, thus avoiding a degradation of reliability of each optical element.

In the second optical pickup according to the present invention, it is preferable that the inclination angle of the parallel plate is changed due to the thermal deformation of a supporter that supports the parallel plate. With this configuration, the thermal deformation due to the temperature change is used for changing the inclination angle, thus enabling a simple configuration.

In the third optical pickup according to the present invention, it is preferable that the collimator lens is secured to the base so that positions of the principal point of the collimator lens and the base do not shift relatively when a temperature is changed, the light source is attached to the base via a supporter, and the change in optical relationship concerning image-formation is compensated for with a shift of a relative position between the luminous point of the light source and the base, which results from deformation or shift of the supporter due to a temperature change. With this configuration, the shift of a relative position between the luminous point of the light source and the base can be realized by using the deformation or shift of the supporter due to a temperature change, thus enabling a simple configuration.

In addition, it is preferable that the light source is secured to the base so that positions of the luminous point of the light source and the base do not shift relatively when a temperature is changed, the collimator lens is attached to the base via a supporter, and the change in optical relationship concerning image-formation is compensated for with a shift of a relative position between the principal point of the collimator lens and the base, which results from deformation or shift of the supporter due to a temperature change. With this configuration, the shift of a relative position between the principal point of the collimator lens and the base can be realized by using the deformation or shift of the supporter due to a temperature change, thus enabling a simple configuration.

In addition, it is preferable that the light source and the collimator lens are each secured to the base via a supporter, and the change in optical relationship concerning image-formation is compensated for with: a shift of a relative position between the luminous point of the light source and the base, which results from deformation or shift of the supporter of the light source due to a temperature change; and a shift of a relative position between the principal point of the collimator lens and the base, which results from deformation or shift of the supporter of the collimator lens due to a temperature change. With this configuration, the amount of compensation can be increased.

In the fourth optical pickup of the present invention, it is preferable that the phase plate is a stepped plate that allows a phase of light to change from inside to outside in accordance with a change in wavelength due to a change in temperature of the light source, a center of the concentric circles coinciding with a center of an optical axis, and a step height of each step allowing the phase of light to shift by an integral multiple of the wavelength with respect to a certain degree of temperature. With this configuration, when a spherical wave enters, a transmission wavefront thereof can be converted back into a plane wave.

In addition, it is preferable that the phase plate is a stepped plate that allows a phase of light to change from inside to outside in accordance with a change in wavelength due to a change in temperature of the light source, a center of the concentric circles coinciding with a center of an optical axis, and a length Ri from the center of the phase plate to the i-th step is represented by the following formula:

$$Ri = f \times (1 - (1 - 2 \times N \times i / 1000 / \delta)^2)^{\frac{1}{2}}$$

wherein f denotes a focal length of the collimator lens in an initial state, $\delta$ is a difference between an amount of a change in optical path length between a luminous point of the light source and the collimator lens and an amount of a change in focal length of the collimator lens with respect to a temperature change $\Delta T$ that corresponds to a change in wavelength of the light source by 1 nm, and N and i are integers of 1 or more.

In addition, it is preferable that the phase plate is a stepped plate that allows a phase of light to change from inside to outside in accordance with a change in wavelength due to a change in temperature of the light source, a center of the concentric circles coinciding with a center of an optical axis, a step height Dp of each step being represented by the following formula:

$$Dp = N \cdot \lambda / (n-1)$$

wherein $\lambda$ denotes a wavelength of the light source in an initial state, n denotes a refractive index of the phase plate, and N is an integer of 1 or more, and a length Ri from the center of the phase plate to the i-th step is represented by the following formula:

$$Ri = f \times (1 - (1 - 2 \times N \times i / 1000 / \delta)^2)^{\frac{1}{2}}$$

wherein f denotes a focal length of the collimator lens in an initial state, $\delta$ is a difference between an amount of a change in optical path length between a luminous point of the light source and the collimator lens and an amount of a change in focal length of the collimator lens with respect to a temperature change ∆T that corresponds to a change in wavelength of the light source by 1 nm, and N and i are integers of 1 or more.

In addition, it is preferable that the collimator lens and the phase plate are integrated. With this configuration, the number of components can be decreased.

A number of preferred embodiments of the present invention will now be described by way of example only and with reference to the accompanying drawings, in which:

Fig. 1 shows a configuration of an optical pickup according to Embodiment 1 of the present invention.

Fig. 2A shows a configuration of a main part of a first example of an optical pickup according to Embodiment 2 of the present invention, and Fig. 2B shows a configuration of a main part of a second example of the same.

Fig. 3 shows a configuration of an optical pickup according to Embodiment 3 of the present invention.

Fig. 4 shows a configuration of a main part of an optical pickup according to Embodiment 4 of the present invention.

Fig. 5 shows a configuration of a main part of an optical pickup according to Embodiment 5 of the present invention.

Fig. 6 shows a configuration of a main part of an optical pickup according to Embodiment 6 of the present invention.

Fig. 7 shows a configuration of a main part of an optical pickup according to Embodiment 7 of the present invention.

Fig. 8A shows a configuration of a main part of an optical pickup according to Embodiment 8 of the present invention, Fig. 8B shows a configuration of a main part of a first example of the optical pickup according to Embodiment 8 of the present invention, Fig. 8C shows a configuration of a main part of a second example of the same and Fig. 8D shows a configuration of a main part of a third example of the same.

Fig. 9A shows a configuration of a main part of an optical pickup according to Embodiment 9 of the present invention, Fig. 9B shows a configuration of a main part of a first example of the optical pickup according to Embodiment 9 of the present invention, Fig. 9C shows a configuration of a main part of a second example of the same, Fig. 9D shows a configuration of a main part of a third example of the same and Fig. 9E shows a configuration of a main part of a fourth example of the same.

Fig. 10A shows a configuration of a main part of an optical pickup according to Embodiment 10 of the present invention, and Fig. 10B is an enlarged view of a phase plate according to Embodiment 10 of the present invention.

Fig. 11 shows a configuration of a conventional optical pickup as one example.

Fig. 12 shows the dependency of astigmatism occurring with a change in length between a light source and a collimator lens on a magnification for beam shaping.

The following describes embodiments of the present invention, with reference to the drawings.

*Embodiment 1*

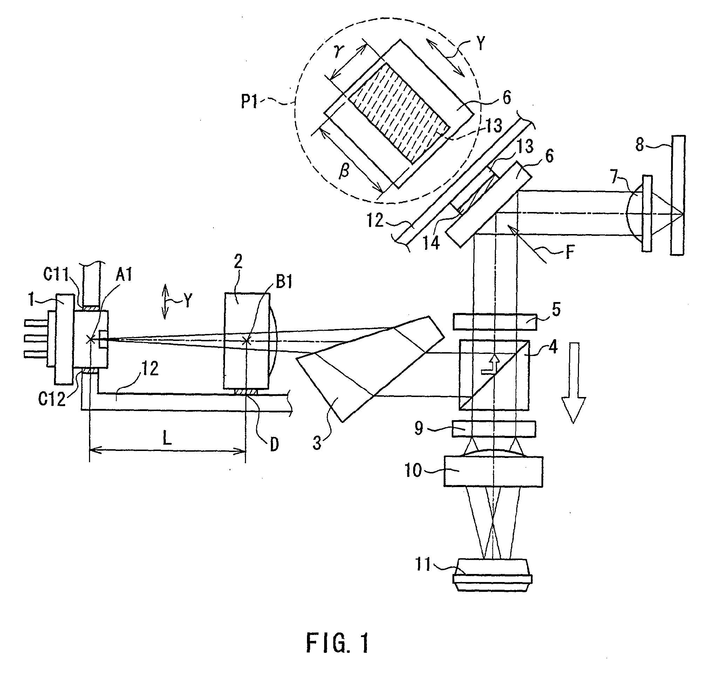

Fig. 1 shows a configuration of an optical pickup according to Embodiment 1 of the present invention. Explanations will be omitted for the same configurations as in the conventional example of Fig. 11. In addition, although an optical base 12 is for mounting a set of optical components thereon, only a limited portion required for the explanation is shown for the simplification of the illustration. This holds true for Embodiment 2 or later.

In Fig. 1, a rising mirror (hereinafter simply referred to as "mirror") 6 as an optical element is bonded and secured to the optical base 12. The mirror 6 is made of a general glass material such as BK7. A portion P1 of Fig. 1 shows the mirror 6 that is viewed from a direction of an arrow F. The mirror 6 is bonded and secured to a protruded mounting portion 13 via an adhesive 14. The protruded mounting portion 13 is integrated with the optical base 12, and the protruded mounting portion 13 may be formed by processing the optical base 12 or may be formed by attaching a separate member to the optical base 12. This holds true for a supporting portion and a wall portion that are integrated with an optical base in Embodiments described later. When a bonded face of the mirror 6 is viewed from the direction of the arrow F, the protruded mounting base 13 is observed as a rectangle including a side β in the width direction and a side γ in the vertical direction as shown in the portion P1.

Herein, it is assumed that a beam shaping direction is the Y direction (a direction indicated by an arrow Y of Fig. 1) and a direction orthogonal to the direction, i.e., the direction of the normal to the sheet surface is the X direction. This assumption holds true for Embodiments described later. In this case, a minor axis direction of an ellipse of a cross-section of a light beam prior to the beam shaping is the Y direction, and a major axis direction of the ellipse is the X direction. In the portion P1 of Fig. 1, the lateral direction with a dimension of β corresponds to the Y direction, and the vertical direction with a dimension of γ corresponds to the X direction.

When a temperature is changed, e.g., is increased, the optical base 12 is stretched due to thermal expansion, so that a length between a luminous point A1 of a light source 1 such as a semiconductor laser and a principal point B1 of a collimator lens 2 is changed. Meanwhile, as for the collimator lens 2, since a wavelength of the light source 1 is changed with the temperature and a refractive index of the lens itself is changed because of its material being thermally altered, its focal position is changed. Thereby, a change in optical path length between the light source 1 and the collimator lens 2 due to the thermal expansion can be compensated for to some extent. However, there is a spherical wave left due to a phase distribution resulting from an insufficient compensation and an overcompensation. When this passes through a beam shaping prism 3, astigmatism occurs. However, a variation amount of this astigmatism with respect to temperatures is generated simply based on a difference between the thermal expansion of the optical base 12 and the change in focal length of the collimator lens 2, so that a sensitivity of the variation is substantially stable. This sensitivity can be determined beforehand according to the configuration by an experiment and calculation. Light with the astigmatism travels through a polarization beam splitter 4 and a quarter-wave plate 5 so as to be reflected by the mirror 6.

Herein, assuming that a temperature change is $\Delta T$ (°C), a thermal variation amount at the rectangular portion that is a bonded surface with the long side β and the short side γ is represented by the following formulas, where L1 denotes a thermal variation amount in the short side direction, L2 denotes a thermal variation amount in the long side direction and $\alpha$ (1/°C) denotes a linear expansion coefficient of the optical base 12 (the protruded mounting portion 13):

$$L1 = \alpha \times \Delta T \times \gamma$$

$$L2 = \alpha \times \Delta T \times \beta.$$

As shown in these formulas, the variation amounts L1 and L2 have anisotropy. Therefore, when the mirror 6 is bonded and secured to the protruded mounting portion 13 with a hard adhesive (for example, a thermosetting type adhesive such as an epoxy based adhesive), a distortion along this direction occurs in the mirror 6 also, which is due to a difference between linear expansion coefficients of a material (glass) of the mirror 6 and a metal material of the optical base 12 caused by the temperature change. This causes a difference in progressing degree of the phase of the light reflected by the mirror 6 between the beam shaping direction (Y direction in the sheet surface) and the direction perpendicular to that (X direction (the direction normal to the sheet surface). As a result, astigmatism is generated so that a curvature of the spherical wave is different between the Y direction and the X direction.

This astigmatism can cancel out the astigmatism of the light incident on the mirror 6, i.e., the astigmatism generated due to a mismatch between: a change in optical path length between the luminous point of the light source 1 and the principal point of the collimator lens 2; and a change in focal length of the collimator lens 2. More specifically, if the astigmatism generated at the mirror 6 and the astigmatism of the light incident on the mirror 6 are opposite in polarity and are equal in size, the light reflected by the mirror 6 becomes a plane wave.

The anisotropy of the distortion from which the aberration at the mirror 6 is generated can be made variable by selecting the shape of the bonded surface appropriately, and its polarity also can be changed by, for example, making the shape of the protruded mounting portion 13 as the bonded surface a rectangle with a long side along the direction perpendicular to the long side direction of the illustrated example. Furthermore, an amount of the aberration generated can be optimized by confirming experimentally an aberration due to thermal distortion solely for the mirror 6. Moreover, an amount of the deformation is substantially stable because it is determined by a difference in thermal expansion between the mirror 6 and the optical base (protruded mounting portion 13).

According to this embodiment, the astigmatism can be eliminated before the light enters the objective lens 7. Therefore, even when an environmental temperature for the optical pickup changes, a spot formed on an optical disc 8 is stable, thus avoiding the deterioration of recording/reproducing qualities. In addition, even when a beam shaping ratio is high and a sensitivity of a change generated due to a relationship between the light source 1 and the collimator lens 2 is high, such a change can be compensated for, thus obtaining a high light efficiency. Furthermore, the astigmatism can be eliminated simply by altering the shape of the bonded surface of the optical base 12 to which the mirror 6 is attached, thus enabling a simple configuration.

Note here that although this embodiment employs the rectangular bonded surface, other shapes can be adopted as long as the shapes allow the distortion to be generated in the mirror 6 in the beam shaping direction and the direction perpendicular to this.

*Embodiment 2*

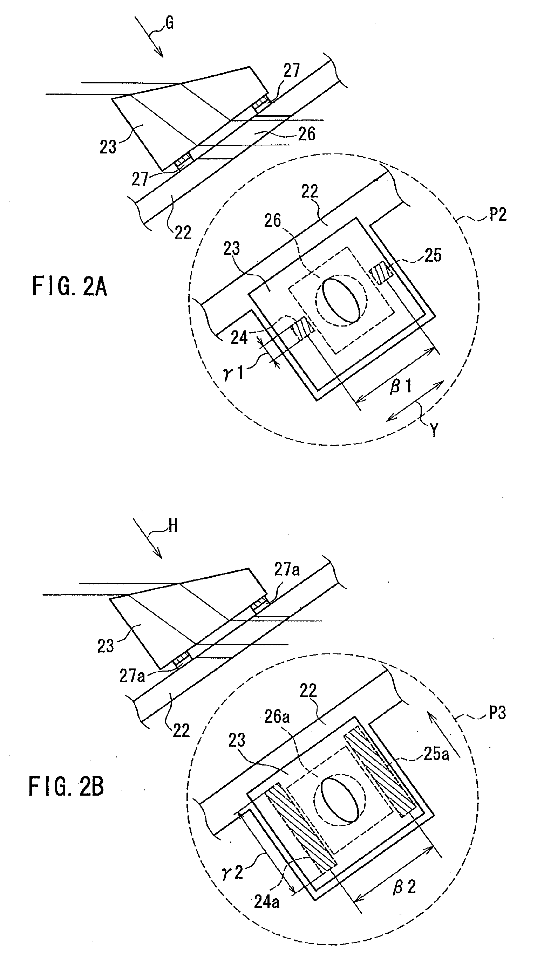

Fig. 2A is an enlarged view of a supporting structure of a beam shaping element 23 according to Embodiment 2. A portion P2 of Fig. 2A shows the beam shaping element 23 that is viewed from a direction indicated by an arrow G. The beam shaping element 23 is an optical element, e.g., a prism. The beam shaping element 23 corresponds to the shaping prism 3 of Fig. 1, and the overall configuration of the pickup is substantially the same as that of Fig. 1. A feature of Embodiment 2 resides in the supporting structure of the beam shaping element 23.

The beam shaping element 23 is bonded and secured to a supporter 27 via contacting surfaces 24 and 25 of the supporter 27 of an optical base 22. The optical base 22 is a portion of a base (corresponding to the optical base 12 of Fig. 1) of the pickup. The optical base 22 is a wall structure that is arranged in a vertically standing condition with respect to a plane corresponding to the sheet surface of Fig. 1. The supporter 27 has an aperture 26 formed so that a shaped beam passes therethrough.

Herein, it is assumed that a length between the contacting surfaces 24 and 25 in the beam shaping direction is β1, a length of the contacting surface in the direction perpendicular to the beam shaping direction is γ1 and a linear expansion coefficient of the optical base 22 is α (1/°C). In this case, similarly to Embodiment 1, a thermal deformation amount L3 of the optical base 22 in the direction perpendicular to the beam shaping direction (the direction normal to the sheet surface) and a thermal deformation amount L4 in the beam shaping direction (Y direction) become as follows:

$$L3 = \alpha \times \Delta T \times \gamma 1$$

$$L4 = \alpha \times \Delta T \times \beta 1.$$

The deformation amounts L3 and L4 have anisotropy, and therefore when the beam shaping element 23 is bonded and secured to the supporter 27 with a hard adhesive, a distortion along the beam shaping direction and the direction perpendicular to this occurs in the beam shaping element 23 also. Here, the distortion is generated due to a difference in linear expansion coefficients between a material (glass) of the beam shaping element 23 and a metal material of the optical base 22, caused by the temperature change. This causes a difference in progressing degree of the phase of the light passing through the beam shaping element 23 between the beam shaping direction and the direction perpendicular to that, which is realized by the beam shaping element 23 alone.

In this case, astigmatism occurs, by which the astigmatism generated due to a mismatch between: a change in optical path length between a luminous point of a light source and a principal point of a collimator lens; and a change in focal length of the collimator lens can be cancelled out. More specifically, if a shape of the bonded surface is set so that these astigmatisms are opposite in polarity and are equal in size, the light passing through the beam shaping element 23 can be made a plane wave even when a temperature is changed.

Fig. 2B is an enlarged view of a supporting structure of the beam shaping element 23 according to another example. A portion P3 of Fig. 2B shows the beam shaping element 23 that is viewed from a direction indicated by an arrow H. A supporter 27a shown in this drawing has contacting surfaces 24a and 25a that are elongated in the direction perpendicular to the beam shaping direction compared with the contacting surfaces 24 and 25 of Fig. 2A.

The anisotropy of the distortion from which the aberration at the beam shaping element 23 is generated can be made variable by selecting the shape of the bonded surfaces appropriately, and its polarity also can be changed by, for example, elongating the shape of the bonded surfaces in the direction perpendicular to the beam shaping direction as shown in Fig. 2B.

Note here that, in this embodiment also, an amount of the aberration generated can be optimized by confirming experimentally an aberration due to thermal distortion solely for the beam shaping element 23, and an amount of the deformation is substantially stable because it is determined by a difference in thermal expansion between the beam shaping element 23 and the optical base.

Furthermore, other shapes can be adopted for the shape of the contacting surfaces as long as the shapes allow the distortion to be generated in the beam shaping element 23 in the beam shaping direction and the direction perpendicular to this.

*Embodiment 3*

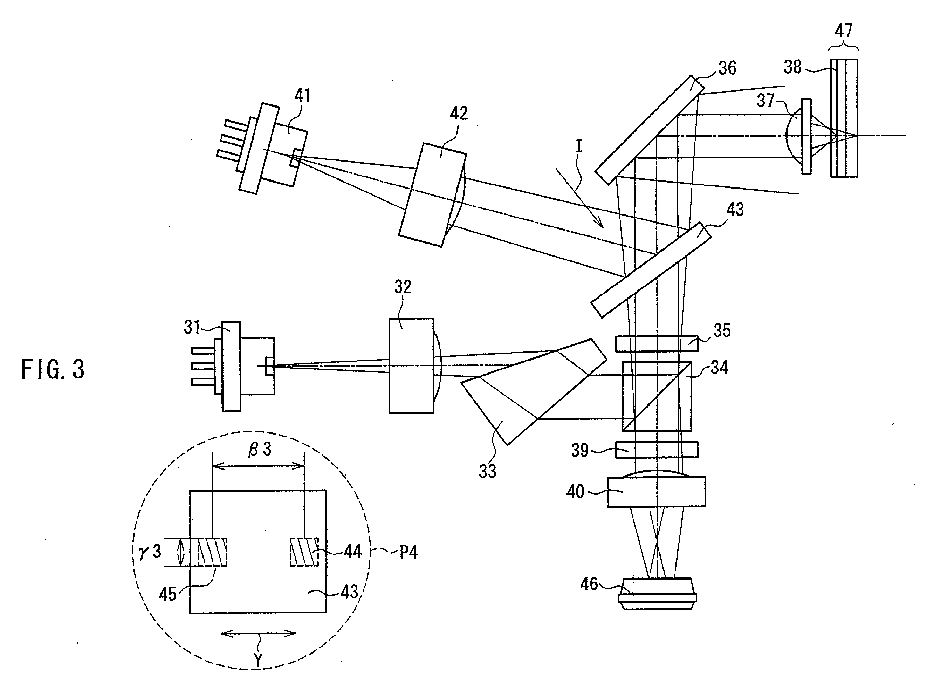

Fig. 3 shows a configuration of an optical pickup according to Embodiment 3. The optical pickup shown in Fig. 3 includes two light sources 31 and 41, which are semiconductor lasers, for example. The light sources 31 and 41 oscillate with different wavelengths from each other.

Light emitted from the light source 41 travels through a collimator lens 42 so as to become a divergent light that is close to parallel light and is reflected by a mirror 43 that is an optical element formed with a parallel plate. Then, its optical path is bent by a mirror 36 so as to be incident on an objective lens 37. The divergent light incident on the objective lens 37 is collected by the objective lens 37, so as to form a focal spot on another type of disc 47 that has a substrate thickness different from the disc compatible with the light source 31.

A portion P4 of Fig. 3 shows the mirror 43 that is viewed from a direction of an arrow I. The mirror 43 is secured to an optical base (not illustrated) as a supporter with an adhesive (not illustrated). Reference numerals 44 and 45 denote contacting surfaces with which the mirror 43 and the adhesive contact with each other.

Note here that this embodiment has a configuration in which beam shaping is not carried out for light from the light source 41. In addition, the mirror 43 has a multilayered film (not illustrated) on its surface, where the multilayered film has wavelength selectivity such that light from the light source 41 is reflected and the light from the light source 31 is allowed to pass therethrough.

Herein, it is assumed that a length between the contacting surfaces 44 and 45 in the beam shaping direction (Y direction) is β3, a length of the contacting surface in the direction perpendicular to the beam shaping direction is γ3 and a linear expansion coefficient of the optical base 22 is α (1/°C). In this case, similarly to Embodiment 1, a thermal deformation amount L5 of the optical base 22 in the direction perpendicular to the beam shaping direction (the direction normal to the sheet surface) and a thermal deformation amount L6 in the beam shaping direction (Y direction in the drawing) become as follows:

$$L5 = \alpha \times \Delta T \times \gamma 3$$

$$L6 = \alpha \times \Delta T \times \beta 3.$$

The deformation amounts L5 and L6 have anisotropy, and therefore when the mirror 43 is bonded and secured with a hard adhesive, a distortion along the beam shaping direction and the direction perpendicular to this occurs in the mirror 43 also. Here, the distortion is generated due to a difference in linear expansion coefficients between a material (glass) of the mirror 43 and a metal material of the optical base 22, caused by the temperature change. This causes a difference in progressing degree of the phase of the light reflected by the rising mirror 43 between the beam shaping direction (Y direction in the sheet surface) and the direction perpendicular to that (the direction normal to the sheet surface), which is realized by the rising mirror 43 alone.

An amount of the thus generated aberration can be used to cancel out astigmatism generated due to a mismatch between: a change in optical path length between the light source and the collimator lens; and a change in focal length of the collimator lens. More specifically, if a shape of the bonded surface is set so that these astigmatisms are opposite in polarity and are equal in size, the light passing through the rising mirror 43 can be made a plane wave even when a temperature is changed.

In this way, similarly to Embodiments 1 and 2, also in the optical system compatible with two types of discs with different substrate thicknesses using two types of light sources, astigmatism can be assigned to the light from the light source 31 such as a semiconductor laser by selecting appropriately the arrangement and the shape of the contacting surfaces 44 and 45 (or the shape of the adhesive) that are attached to the mirror 43 as shown in the portion P4 of Fig. 3. Here, the astigmatism is due to the anisotropy in deformation amount, and similarly to Embodiments 1 and 2, this astigmatism is assigned because of a distortion occurring in the beam shaping direction and the direction perpendicular to this.

Note here that, in this case, although astigmatism can be generated also for the light from the light source 41 due to the distortion of the mirror 43, the generation amount is sufficiently small because the beam shaping is not carried out for the light from the light source 41.

*Embodiment 4*

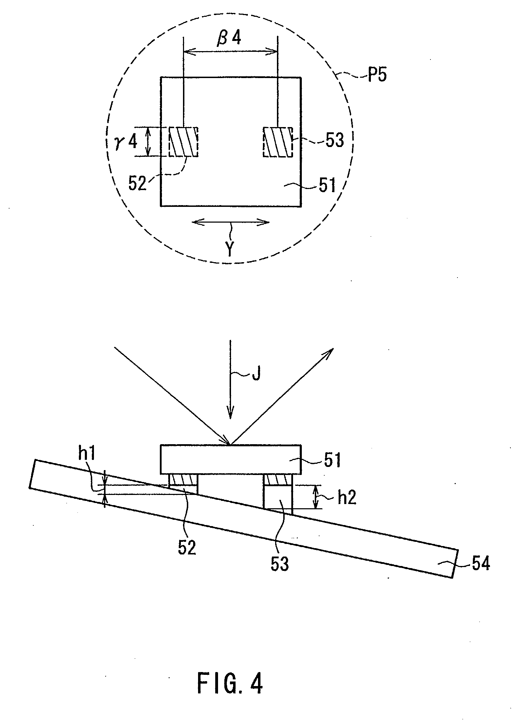

Fig. 4 is an enlarged view of a supporting structure of a mirror 51 according to Embodiment 4. The overall view of the optical system is the same as in Embodiment 1. A portion P5 of Fig. 4 shows the mirror 51 that is viewed from a direction of an arrow J. In Fig. 4, the mirror 51 is bonded and secured to an optical base 54 with supporters 52 and 53.

In the example of Fig. 4, step heights h1 and h2 of the supporters 52 and 53, which are structures protruded from the optical base 54, are made different. With this configuration, when an environmental temperature of the pickup is changed, e.g., is increased, there is a difference in stretching amount between the supporters 52 and 53. As a result of this, the mirror 51 bends toward the beam shaping direction (Y direction), so that astigmatism occurs where phase is made different between the Y direction and the X direction perpendicular to that.

Herein, it is assumed that a length between the supporters 52 and 53 in the beam shaping direction (Y direction) is β4, a length of the bonded surface in the direction perpendicular to the beam shaping direction is γ4 and a linear expansion coefficient of the optical base 54 is α (1/°C). In this case, similarly to Embodiment 1, a thermal deformation amount L7 in the beam shaping direction of the optical base 52 and a thermal deformation amount L8 in the direction perpendicular to that become as follows:

$$L7 = \alpha \times \Delta T \times \beta 4$$

$$L8 = \alpha \times \Delta T \times \gamma 4.$$

L7 and L8 have anisotropy, and therefore when the mirror 51 is bonded and secured thereto with a hard adhesive, a distortion along the beam shaping direction and the direction perpendicular to this occurs in the mirror 51 also. Here, the distortion is generated due to a difference in linear expansion coefficients between a material (glass) of the mirror 51 and a material of the optical base 54, caused by the temperature change.

This causes a difference in progressing degree of the phase of the light reflected by the mirror 51 between the beam shaping direction (Y direction in the sheet surface) and the direction perpendicular to that (the direction normal to the sheet surface), which is realized by the mirror 51 alone. An amount of the thus generated aberration can be used to cancel out astigmatism generated due to a mismatch between: a change in optical path length between the light source and the collimator lens; and a change in focal length of the collimator lens. That is to say, if a shape of the bonded surfaces is set so that these astigmatisms are opposite in polarity and are equal in size, the light passing through the rising mirror 51 can be made a plane wave even when a temperature is changed.

More specifically, by selecting optimally a material and dimensions of the supporters 52 and 53 of the mirror 51, a thickness of the rising mirror, and the like, the astigmatism generated between the light source and the collimator lens can be canceled out.

This embodiment is effective for the case where the generated amount of astigmatism is not enough in the configurations as in Embodiments 1 to 3, because separated supporters have different deformation amounts in the height direction whereby the deformation amounts can be added to the optical element bonded thereto. This holds true for the following Embodiments 5 and 6.

Note here that the same effects can be obtained when the supporters 52 and 53 have different linear expansion coefficients from each other. In addition, the number of supporting points is not limited to two. This also holds true for the following Embodiments 5 and 6.

*Embodiment 5*

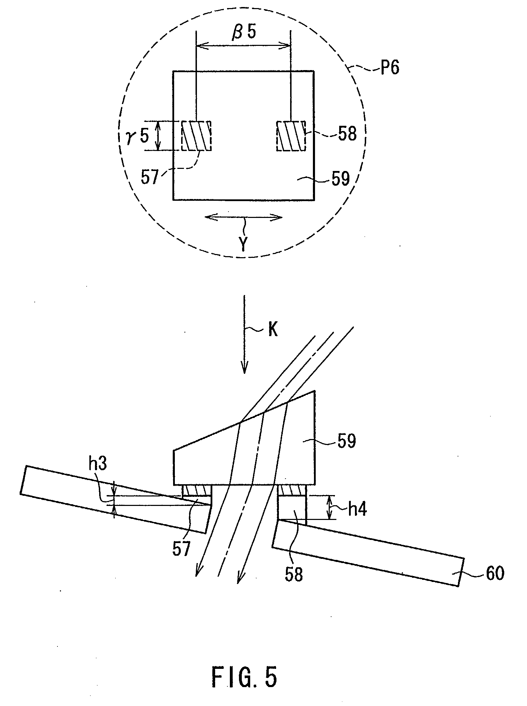

Fig. 5 is an enlarged view of a supporting structure of a beam shaping prism 59 according to Embodiment 5. The overall view of the optical system is the same as in Embodiment 1. The beam shaping prism 59 as an optical element is supported by a supporter 57 (height of h3) and a supporter 58 (height of h4) with different lengths, which are structures protruded from an optical base 60 as a supporter.

When a temperature is changed, the supporters 57 and 58 with different lengths are extended in different manners. Thereby, the beam shaping prism 59 bends toward the direction parallel to or perpendicular to the beam shaping direction, and astigmatism occurs so that phase is different between the direction along the bending and the direction perpendicular to that.

A portion P6 of Fig. 5 shows the beam shaping prism 59 that is viewed from a direction of an arrow K. In this embodiment also, similarly to Embodiment 4 shown in Fig. 4, a length β5 and a length γ5 are different. Therefore, this configuration also allows anisotropy to be generated in a deformation amount of the optical base 60.

In the above-stated configuration, astigmatism generated between the light source and the collimator lens can be cancelled out by selecting optimally a material, dimensions and the like of the supporters 57 and 58 of the beam shaping prism 59.

*Embodiment 6*

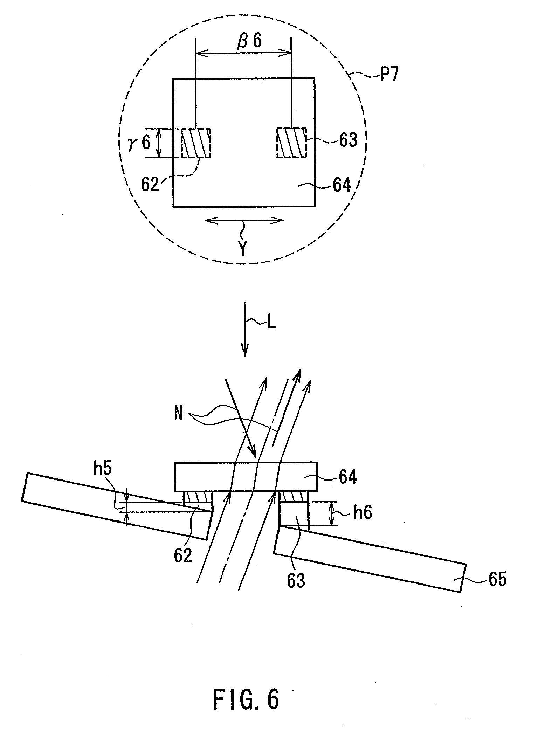

Fig. 6 shows a supporting structure of a parallel plate 64 according to Embodiment 6. The configuration of this drawing can be used for a configuration including two light sources as shown in Fig. 3, for example. An arrow N of Fig. 6 corresponds to the light from the second light source 41. The parallel plate 64 is supported by a supporting portion 62 (height of h5) and a supporting portion 63 (height of h6) that are structures protruded from an optical base 65 and are different in length. When a temperature is changed, the parallel plate 64 bends toward the direction parallel to or perpendicular to the beam shaping direction, and astigmatism occurs so that phase is different between the direction along the bending and the direction perpendicular to that.

A portion P7 of Fig. 6 shows the parallel plate 64 that is viewed from a direction of an arrow L. In this embodiment also, similarly to Embodiment 4 shown in Fig. 4, a length β6 and a length γ6 are different. Therefore, this configuration also allows anisotropy to be generated in a deformation amount of the optical base 65.

In the above-stated configuration, astigmatism generated between the light source and the collimator lens can be cancelled out by selecting optimally a material, dimensions and the like of the supporters 62 and 63 of the parallel plate 64.

The above Embodiments 1 to 6 describe the cases where the astigmatism component caused by a difference between a change of the luminous point and the principal point of the collimator lens resulting from thermal expansion and a change in focal length of the collimator lens due to a temperature change is compensated for using one component constituting the optical system. However, when the amount to be compensated for is large, a deformation amount of such a component becomes large, which may adversely affect the reliability for bonding and the like.

In such a case, by combining these configurations and not using one of them singly, the amount of aberration to be generated can be distributed over the respective components so as to make the compensation amount for each component smaller.

*Embodiment 7*

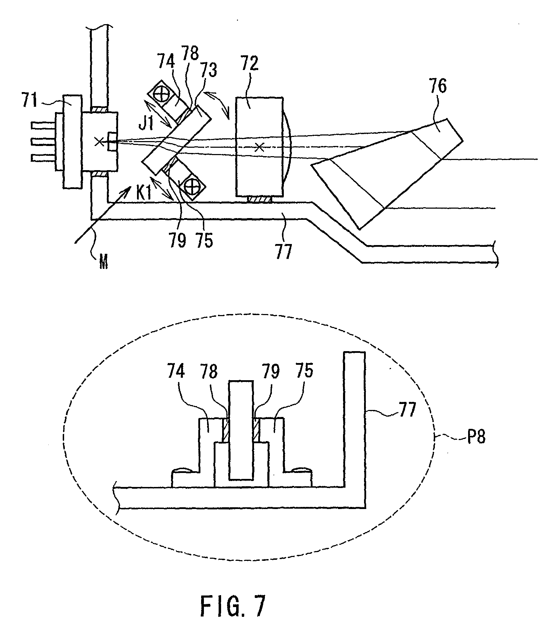

Fig. 7 shows a configuration of a main part of an optical pickup according to Embodiment 7. As shown in Fig. 7, a parallel plate 73 is disposed between a semiconductor laser light source 71 and a collimator lens 72. This parallel plate 73 is disposed so that its normal direction is inclined beforehand with respect to an optical axis so as to compensate for an astigmatism component due to an astigmatic difference (a difference in luminous point position between a direction in a laser resonant layer and a direction perpendicular to that) possessed by the light source 71.

A portion P8 of Fig. 7 shows the parallel plate 73 that is viewed from a direction of an arrow M. The parallel plate 73 is supported by supporters 74 and 75 that are attached to an optical base 77 via adhesives 78 and 79, respectively. The adhesives 78 and 79 are relatively soft and have elasticity. Therefore, when the supporters 74 and 75 are thermally expanded and contract in directions of arrows J1 and K1 due to thermal deformation, the parallel plate 73 rotates in the sheet surface.

Generally, when a parallel plate is inclined in an optical path of divergent light, astigmatism occurs in an amount corresponding to the inclination. In the configuration of Fig. 7, the inclination of the parallel plate 73 is changed in accordance with a temperature change, astigmatism in the amount corresponding to the temperature change can be generated. That is to say, with the supporting configuration of the parallel plate 73 as shown in Fig. 7, astigmatism can be cancelled out, which would occur in the light subjected to beam shaping due to a temperature change if there was no parallel plate 73 included.

More specifically, astigmatism can be generated by the parallel plate 73 so as to have the opposite polarity of that of the astigmatism generated in the light subjected to beam shaping due to the temperature change, which would occur if there was no parallel plate 73 included. Thereby, a pickup can be realized by which the generation of the astigmatism due to a temperature change, in the light subjected to beam shaping can be avoided.

Note here that driving means such as an actuator may be employed positively as means for inclining this parallel plate, and its supporting configuration is not limited especially as long as the inclination of the parallel plate can be changed in accordance with the temperature change.

*Embodiment 8*

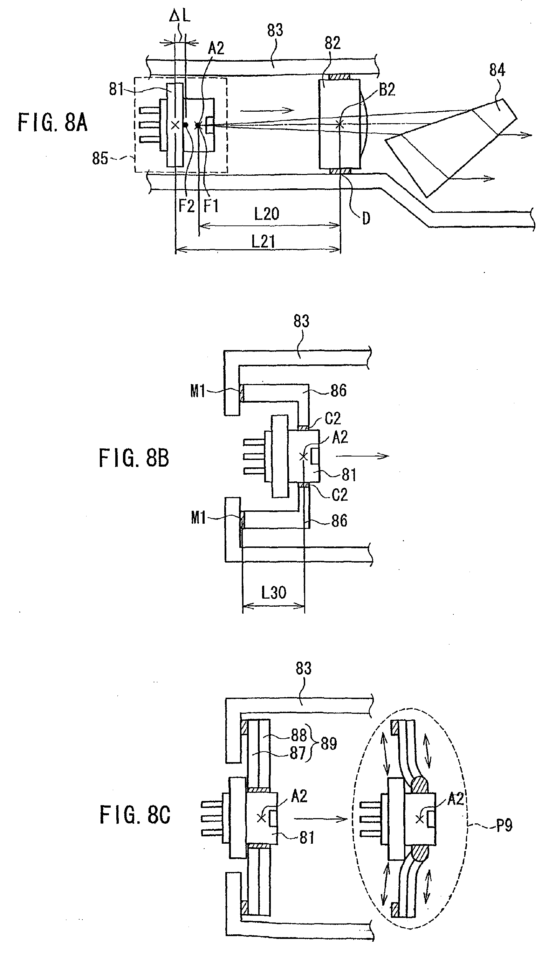

Fig. 8A shows a configuration of a main part of an optical pickup according to Embodiment 8. In Fig. 8A, a collimator lens 82 is bonded and secured to an optical base 83. As a result of this bonding and securing, a positional relationship in an optical axis direction between a principal point B2 and a position D of the optical base 83 that corresponds to B2 in the optical axis direction does not change even when a temperature is changed. A light source 81 is attached to the optical base 83 with a supporting structure 85. With this configuration, a position of a luminous point A2 moves relative to the optical base 83 in accordance with the temperature change.

Here, when a temperature is changed, e.g., is increased, the optical base 83 is thermally expanded, so that a length between the luminous point A2 of the light source 81 and the principal point B2 of the collimator lens 82 is increased from L20 to L21.

Meanwhile, as for the collimator lens 82, a wavelength of the light source 81 is changed with the temperature, while a refractive index of the lens itself also is changed because of its material being thermally altered, so that a focal position of the collimator lens 82 is changed from F1 to F2. Thereby, a change in length between the light source 81 and the collimator lens 82 due to thermal expansion is compensated for to some extent. However, the compensation is still insufficient, which causes a change in optically positional relationship from the state before the temperature change. This embodiment is aimed to compensate for this optically positional relationship with the supporting structure of the light source 81 by shifting the luminous point A2 relative to the optical base 83 by a length $\Delta L$ that corresponds to the shortage of the compensation in accordance with the temperature change.

Figs. 8B to 8D show specific configurations of the supporting structure of the light source 81. Fig. 8B shows a first example of the supporting structure of the light source 81. The light source 81 is bonded and secured to a supporter 86 at a position C2 that corresponds to the luminous point A2 in the optical axis direction. The supporter 86 is bonded and secured to the optical base 83 at a point M1.

Here, it is assumed that a linear expansion coefficient of the optical base 83 is $\alpha 1$, a linear expansion coefficient of a material of the supporter 86 is α2 (α2>α1), and a length between the luminous point A2 and the supporting point M1 of the supporter 86 is L30. Then, when a temperature is increased by ΔT, a displacement amount of the position of the luminous point A2 becomes the following ΔL:

$$\Delta L = (\alpha 2\text{-}\alpha 1) \times \Delta T \times L30.$$

With this configuration, the luminous point A2 is displaced by ΔL toward the direction indicated by an arrow along the optical axis because of α2>α1. In other words, in the case where a deformation amount of the optical base 83 due to thermal expansion is so large that a change in focal length of the collimator lens 82 due to the change in refractive index thereof is not enough for correcting the deformation amount, the displacement by ΔL can compensate for this.

In the case where a temperature is decreased, a thermally contracting amount of the supporter 86 becomes larger than that of the optical base 83 because of α2>α1. Therefore, the light source 81 moves toward the direction opposite to the arrow along the optical axis. Although the above description deals with the case where the change in focal position of the collimator lens is smaller than the thermal deformation of the optical base, the same effects can be obtained even in the inverse case by making a linear expansion coefficient of the supporter 86 smaller than that of the optical base 83 so that the light source 81 is displaced in the opposite direction in accordance with a temperature change.

Fig. 8C shows a second example of the supporting structure of the light source. The light source 81 is attached to the optical base 83 via a plate 89. The plate 89 has a structure of two metal plates 87 and 88 with different linear expansion coefficients being bonded together, where materials of the plates are aluminum and zinc, for example. When a temperature is increased, the plate 89 is deformed so as to warp due to a bimetallic effect because the two metal plates 87 and 88 have different linear expansion coefficients. A portion P9 of Fig. 8C shows a state after this deformation. As a result of the deformation of the plate 89, the luminous point A2 of the light source 81 supported by the plate 89 moves on the optical base toward the optical axis direction indicated by an arrow.

When a temperature is decreased, the two metal plates 87 and 88 with different linear expansion coefficients contract thermally. Therefore, the plate 89 is deformed to the side opposite to the case of the thermal expansion, and the light source 81 moves toward the direction opposite to the arrow along the optical axis. Although the above description deals with the case where the change in focal position of the collimator lens is smaller than the thermal deformation of the optical base, the same effects can be obtained even in the inverse case by reversing a magnitude relationship of the two metal plates 87 and 88 so that the light source 81 is displaced in the opposite direction in accordance with the temperature change.

The warping amount of the plate 89 can be made an optimum value by selecting a material of the plates and adjusting a length of the plates. With the configuration of Fig. 8C, the insufficiency in the amount to be corrected can be compensated for with the deformation by the warping of the plate 89.

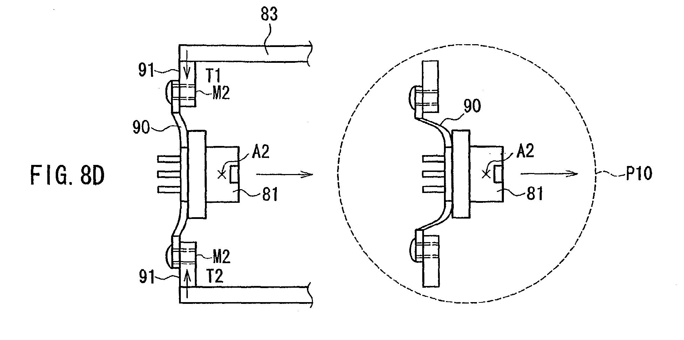

Fig. 8D shows a third example of the supporting structure of the light source. The light source 81 is secured to a wall 91 of the optical base 83 with screws via a plate spring 90 having a curvature. When a temperature is increased, the wall 91 is extended due to thermal expansion toward directions of arrows T1 and T2 of this drawing. Then, a gap between points M2 becomes narrower and the plate spring 90 contracts in a direction perpendicular to the optical axis, and the light source 81 moves toward a direction indicated by an arrow along the optical axis. A portion P10 of Fig. 8D shows a state after this deformation.

When a temperature is decreased, the wall 91 contracts due to thermal contraction in the directions opposite to the arrows T1 and T2 of the drawing, and therefore the gap between the points M2 is widened, the plate spring 90 is extended in the direction perpendicular to the optical axis and the light source 81 moves toward the direction opposite to the arrow along the optical axis. Although the above description deals with the case where the change in focal position of the collimator lens is smaller than the thermal deformation of the optical base, the same effects can be obtained even in the inverse case by reversing a protruded direction of the plate spring 90 so that the light source 81 is displaced in the opposite direction in accordance with the temperature change.

Since the plate spring 90 is secured to the wall 91 with screws, the luminous point A2 moves only in the optical axis direction and not in a direction along a plane perpendicular to the optical axis. Therefore, a deviation of the accuracy for the optical axis of the optical system of the optical pickup, which is determined by a position in the plane perpendicular to the optical axis, can be avoided by making a configuration free from anisotropy for thermal deformation amounts of the wall 91 in the direction T1 and the direction T2.

As stated above, according to this embodiment, even when a design includes a mismatch of a variation in focal length of the collimator lens with a change in relative positions of the light source and the collimator lens due to thermal expansion of the optical base, this mismatch can be corrected with a simple configuration. Furthermore, there is no need to provide a cooling device so as to make a wavelength of the light source constant, and therefore this also allows the configuration to be simplified.

Moreover, this embodiment allows the reversible compensation for a change in optically positional relationship for the cases where both a temperature is increased and is decreased, and therefore this embodiment can apply to the cases where both the compensation for the change in optically positional relationship is insufficient and is excessive.

Note here that the shape of the supporter is not limited to the above-stated example, and other configurations can be adopted as long as they enable the luminous point of the light source to move reversibly with respect to the optical base when a temperature is changed.

*Embodiment 9*

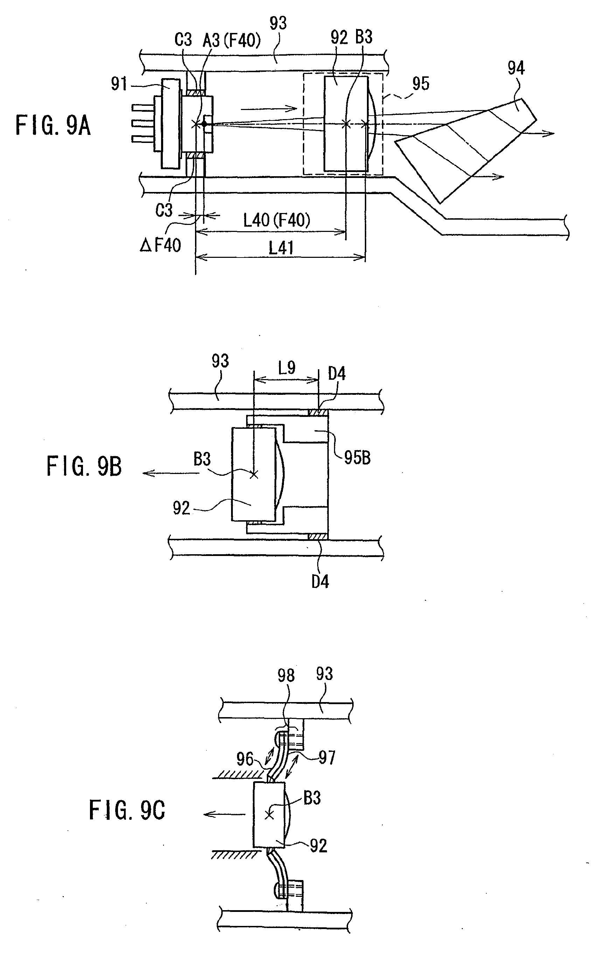

Fig. 9A shows a configuration of a main part of an optical pickup according to Embodiment 9. In Fig. 9A, a light source 91 is bonded and secured to an optical base 93. As a result of this bonding and securing, a positional relationship in an optical axis direction between a position of a luminous point A3 and a position C3 of the optical base 93 that corresponds to A3 in the optical axis direction does not change even when a temperature is changed. Meanwhile, a collimator lens 92 is attached to the optical base 93 via a supporting structure 95. With this configuration, a position of a principal point B3 moves relative to the optical base 93 in accordance with the temperature change.

Here, when a temperature is changed, e.g., is increased, the optical base 93 is thermally expanded, so that a length between the luminous point A3 of the light source 91 and the principal point B3 of the collimator lens 92 is changed from L40 to L41.

Meanwhile, as for the collimator lens 92, a wavelength of the light source 91 is changed with the temperature, while a refractive index of the lens itself also is changed because of its material being thermally altered, so that a focal length of the collimator lens 92 is changed from F40(L40) to F41. A difference $\Delta$F40 in focal position between F40 and F41, i.e., a shortage of compensation with the lens of $\Delta$F40 is compensated using the supporter 95 of the collimator lens 92 so as to make the principal point B3 of the lens move toward a side of the light source 91 relative to the optical base 93.

Figs. 9B to 9E show specific configurations of the supporting structure 95 of the collimator lens 92. Fig. 9B shows a first example of the supporting structure of the collimator lens 92. In Fig. 9B, the collimator lens 92 is bonded and secured to the optical base 93 via a supporter 95B. The supporter 95B is bonded and secured to the optical base 93 at a point D4. The collimator lens 92 is bonded and secured to the supporter 95B at positions corresponding to its principal point B3. The supporter 95B is made of a material having a linear expansion coefficient larger than that of the optical base 93.

Herein, it is assumed that a length between the point D4 where the supporter 95B is secured to the base 93 and the principal point B3 of the collimator lens 92 is L9, a linear expansion coefficient of the supporter 95B is $\alpha$9 and a linear expansion coefficient of the optical base 93 is $\alpha$10 ($\alpha$9>$\alpha$10). Then, when a temperature is increased by $\Delta$T, a displacement amount of the position of the principal point B3 becomes the following $\Delta$L:

$$\Delta L = (\alpha9 - \alpha10) \times \Delta T \times L9.$$

With this configuration, the principal point B3 is displaced by $\Delta$L toward the optical axis direction indicated by an arrow (toward the light source 91) because of $\alpha$9>$\alpha$10. In other words, in the case where the degree of thermal expansion of the optical base 93 is so large that a change in focal position of the collimator lens 92 due to the change in refractive index thereof is not enough for correcting it, the displacement by $\Delta$L can compensate for this.

In the case where a temperature is decreased, a thermally contracting amount of the supporter 95B becomes larger than that of the optical base 93 because of $\alpha$9>$\alpha$10. Therefore, the collimator lens 92 moves toward the direction opposite to the arrow along the optical axis. Although the above description deals with the case where the change in focal position of the collimator lens 92 is smaller than the thermal deformation of the optical base 93, the same effects can be obtained even in the inverse case by making a linear expansion coefficient of the supporter 95B smaller than that of the optical base 93 so that the collimator lens 92 is displaced in the opposite direction in accordance with a temperature change.

Fig. 9C shows a second example of the supporting structure of the collimator lens. The collimator lens 92 is attached to the optical base 93 via a plate 98. The plate 98 has a structure of two metal plates 96 and 97 with different linear expansion coefficients bonded together. When a temperature is increased, the plate 98 is deformed so as to warp due to a bimetallic effect because the two metal plates 96 and 97 have different linear expansion coefficients.

As a result of the deformation of the plate 98, the principal point B3 of the collimator lens 92 supported by the plate 98 moves toward the direction indicated by an arrow along the optical axis. The warping amount of the plate 98 can be made an optimum value by selecting a material of the plates and adjusting a length of the plates. With the configuration of Fig. 9C, the insufficiency in the amount to be corrected can be compensated for with the deformation by the warping of the plate 98.

When a temperature is decreased, the two metal plates 96 and 97 with different linear expansion coefficients contract thermally. Therefore, the plate 98 is deformed to the side opposite to the case of the thermal expansion, and the collimator lens 92 moves toward the direction opposite to the arrow along the optical axis. Although the above description deals with the case where the change in focal position of the collimator lens 92 is smaller than the thermal deformation of the optical base 93, the same effects can be obtained even in the inverse case by reversing a magnitude relationship of the two metal plates 96 and 97 so that the collimator lens 92 is displaced in the opposite direction in accordance with the temperature change.

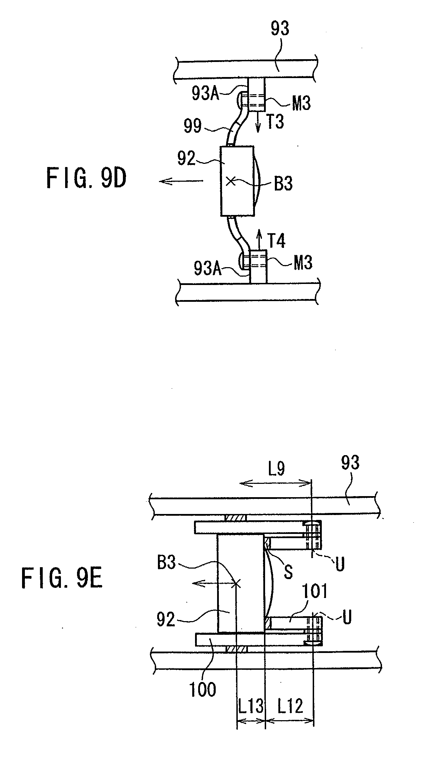

Fig. 9D shows a third example of the supporting structure of the collimator lens. The collimator lens 92 is secured at a principal point 83 to a wall 93A of the optical base 93 with screws via a plate spring 99 having a curvature. When the wall 93A is extended due to thermal expansion toward directions of arrows T3 and T4 of this drawing, a gap between points M3 becomes narrower and the plate spring 99 contracts in a direction perpendicular to the optical axis, and the collimator lens 92 moves toward a direction indicated by an arrow along the optical axis.

When a temperature is decreased, the wall 93A contracts due to thermal contraction in the directions opposite to the arrows T3 and T4 of the drawing, and therefore the gap between the points M3 is widened, the plate spring 99 is extended in the direction perpendicular to the optical axis and the collimator lens 92 moves toward the direction opposite to the arrow along the optical axis. Although the above description deals with the case where the change in focal position of the collimator lens 92 is smaller than the thermal deformation of the optical base 93, the same effects can be obtained even in the inverse case by reversing a protruded direction of the plate spring 99 so that the collimator lens 92 is displaced in the opposite direction in accordance with the temperature change.

Since the plate spring 99 is secured to the wall 93A with screws, the principal point B3 moves only in the optical axis direction and not in a direction along a plane perpendicular to the optical axis. Therefore, a deviation of the accuracy for the optical axis of the optical system of the optical pickup, which is determined by a position in the plane perpendicular to the optical axis, can be avoided by making a configuration free from anisotropy for thermal deformation amounts of the wall 93A in the direction T3 and the direction T4. Therefore, since an intensity distribution of the light from the light source does not change with a temperature change, an intensity distribution of a spot formed on an optical disc also becomes stable.

Fig. 9E shows a fourth example of the supporting structure of the collimator lens. In the example of Fig. 9E, the supporter of the collimator lens 92 has a double-structure. This example is effective for the case where a variation amount of a length between the light source 91 and the collimator lens 92 due to thermal expansion of the optical base 93 is so large that an insufficiency in the compensation with a change in focal length of the collimator lens 92 becomes large.

A supporter 100 is attached to the optical base 93 at a position corresponding to the principal point B3 of the collimator lens 92 with an adhesive. The supporter 100 is made of the same material as that of the optical base 93, and also a linear expansion coefficient of the adhesive is the same as that of the optical base 93. The collimator lens 92 is bonded and secured to a supporter 101 at an edge face S. The supporter 101 has a linear expansion coefficient larger than those of the supporter 100 and the optical base 93. The supporter 101 is secured to the supporter 100 with screws.

Here, when a temperature of the pickup is increased, for example, a shift amount of the principal point B3 of the collimator lens 92 by the supporting structure becomes a value obtained by adding: an extended amount of the supporter 101 in the optical axis direction where a screwed point U of the supporter 101 with the supporter 100 is a fulcrum; and a thermal expansion amount of the collimator lens 92 where a bonding position with the supporter 101 (i.e., edge face) is a fulcrum. As a result, an amount of the proximity of the principal point B3 of the collimator lens 92 with the light source 91 can be increased. More specifically, the shift amount of the principal point B3 is represented by the following $\Delta L$:

$$\Delta L = \alpha 15 \times L13 \times \Delta T + \alpha 16 \times L12 \times \Delta T$$

where $\alpha 15$ denotes a linear expansion coefficient of the collimator lens 92, $\alpha 16$ denotes a linear expansion coefficient of the supporter 101, L12 denotes a length between the screwed point U of the supporter 100 with the supporter 101 and the bonded face S of the supporter 101 with the collimator lens 92 and L13 denotes a length between the bonded face S and the principal point B3.

When a temperature is decreased, a direction of the shift becomes opposite due to thermal contraction, so that the shift amount of the principal point B3 by the supporting structure becomes a value obtained by adding: a contraction amount of the supporter 101 where the screwed point U is a fulcrum; and a thermal contraction amount of the collimator lens 92 where the edge face S is a fulcrum. Although the above description deals with the case where the change in focal position of the collimator lens 92 is smaller than the thermal deformation of the optical base 93, the same effects can be obtained even in the inverse case by making the linear expansion coefficient of the supporters 100 and 101 smaller than that of the optical base 93 so that the collimator lens 92 is displaced in the opposite direction in accordance with the temperature change.

With this configuration, all of the optical base 93, the supporter 100 and the adhesive for bonding them have the same linear expansion coefficient, and therefore even when a temperature surrounding the pickup is changed repeatedly, a load is not applied to the bonded portion, so that reliability can be secured over time and a large correction amount can be obtained in a small space.

Furthermore, the positional adjustment of the collimator lens 92, which is for eliminating initial astigmatism, can be carried out by shifting the supporter 100 along the optical base 93, which facilitates the adjustment.

As stated above, according to this embodiment, even when a design includes a mismatch of a variation in focal length of the collimator lens 92 with a change in relative positions of the light source and the collimator lens due to thermal expansion of the optical base, this mismatch can be corrected with a simple configuration. Furthermore, there is no need to provide a cooling device so as to make a wavelength of the light source constant, and therefore this also allows the configuration to be simplified.

Moreover, this embodiment allows the reversible compensation for a change in optically positional relationship for both of the cases where a temperature is increased and decreased, and therefore this embodiment can apply to both of the cases where the compensation for the change in optically positional relationship is short and excessive.

Note here that the shape of the supporter is not limited to the above-stated example, and other configurations can be adopted as long as they enable the principal point of the collimator lens to move reversibly with respect to the optical base when a temperature is changed.

Embodiments 8 and 9 describe methods in which one of the light source and the collimator lens is secured to the optical base, and a mismatch between thermal expansion of the optical base and a change in focal length of the collimator lens is corrected with one of them. However, these methods may be combined so as to increase its correction amount.

Furthermore, in the case where a temperature change causes one of the light source unit and the collimator lens unit to move in the direction that is unfavorable for astigmatism because of a configuration of the pickup, this may be compensated for with a change of the other unit.

*Embodiment 10*

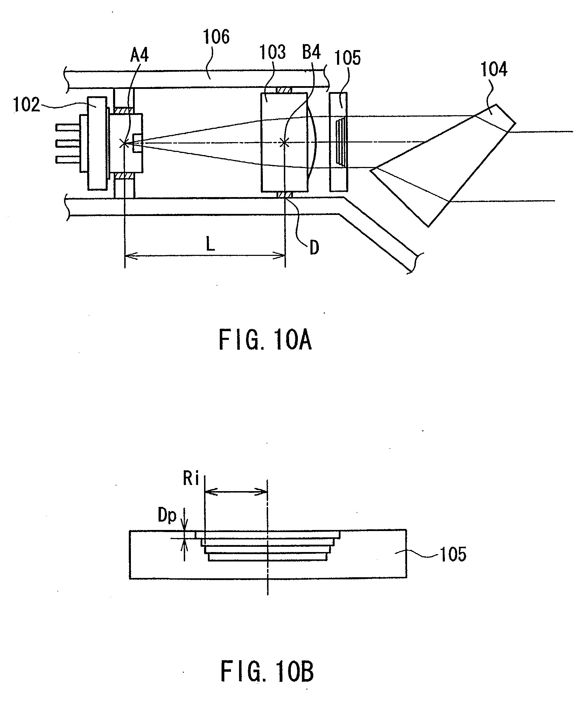

Fig. 10A shows a configuration of a main part of an optical pickup according to Embodiment 10. Fig. 10B is an enlarged view of a phase plate with steps (hereinafter simply referred to as "phase plate") 105. In Fig. 10A, light emitted from a light source 102 such as a semiconductor laser travels through a collimator lens 103 so as to be parallel light, and then passes through the phase plate 105 having a concentric step configuration including a plurality of step heights in its cross section. The light passing through the phase plate 105 is subjected to beam shaping by a beam shaping prism 104.

In the phase plate 105, a step height Dp of each step is represented by the following formula (1):

$$Dp = N \cdot \lambda / (n - 1) \ (N=1, 2, 3 \ldots) \qquad \text{(Formula (1)}$$

where $\lambda$ denotes a wavelength of the light source 102 in an initial state (room temperatures) and n denotes a refractive index of the phase plate.

In the initial state, i.e., at room temperatures, light collimated by the collimator lens 103 is a plane wave, and when this light passes through the phase plate having a step height that is an integral multiple (N times) of the wavelength as shown in Formula 1, the condition of the plane wave is maintained.

On the other hand, as a temperature surrounding the pickup is changed, the light passing through the collimator lens 103 becomes a spherical wave due to a difference between: a change in optical length between a luminous point A4 and a principal point B4 of the lens due to thermal expansion of an optical base 106; and a change in focal length of the lens due to a change of its refractive index.

At this time, a wavelength of the light source 102 also is changed in accordance with the temperature change. That is to say, assuming that a change in wavelength is $\Delta\lambda$, a phase difference of $\Delta\lambda / (n-1)$ is generated between adjacent step heights. Since these step heights are changed concentrically while forming consecutive steps, after the light of the plane wave with the thus changed wavelength enters this phase plate, the light passes through the phase plate 105 to be a spherical wave.

Conversely, in the case a spherical wave enters the phase plate, the transmission wavefront can be converted back into a plane wave by satisfying conditions for giving a phase distribution so as to cancel out this spherical wave. In this case, since the condition of the plane wave is maintained even when a temperature is changed, there is no astigmatism generated in the light passing through the beam shaping prism.

Here, it is assumed that a temperature is changed by $\Delta T$ so as to change a wavelength of the light source by 1 nm. Meanwhile, it is assumed that, with respect to the temperature change of $\Delta T$, a difference between an amount of a change in optical path length between the luminous point A4 and the lens principal point B4 due to thermal expansion of the optical base 106 and an amount of a change in focal length of the collimator lens 103 is $\delta$. In this case, a length Ri from the center to the i-th step height should satisfy the following formula (2) as well as the formula (1) as the conditions to correct the above-stated spherical wave:

$$Ri = f \times (1 - (1 - 2 \times N \times i / 1000 / \delta)^2)^{\frac{1}{2}} \qquad \text{(Formula 2)}$$

(N = 1, 2, 3 ... (made the same value as N in Formula 1), i = 1, 2, 3 ...)
where f denotes a focal length of the collimator lens 103 in the initial state (at normal temperatures).

With this configuration, the generation of astigmatism due to a temperature change can be avoided simply by adding one element.

Note here that the number of steps of the phase plate can be decreased in accordance with a desired correction accuracy, which facilitates the fabrication of the phase plate. Furthermore, this phase plate structure may be formed in the lens itself.

As stated above, the optical pickups of the present invention can maintain stable recording/reproducing qualities with a simple configuration even when a temperature surrounding it is changed. Therefore, these optical pickups are effective for optical disc recorders, optical disc players and the like.

**Claims**

1. An optical pickup comprising optical elements, via which light from a light source can travel so as to be collected on an information recording medium, the optical elements comprising:

   a collimator lens that collects divergent light from the light source so as to form parallel light;
   a beam shaping element that alters an intensity distribution of the parallel light in cross-section; and
   an objective lens that collects light passing through the beam shaping element onto the information recording medium,
   wherein the optical elements comprise an optical element that is secured to a supporter so as to generate first astigmatism due to deformation caused by a temperature change, wherein the deformation caused by the temperature change is generated due to a difference in linear expansion coefficient between the optical element that generates the first astigmatism and the supporter, and
   the first astigmatism is equal in size and is opposite in polarity to a second astigmatism that occurs when the parallel light passes through the beam shaping element, the parallel light having a phase distribution generated by a difference between: (a) an amount of a change in optical path length between a luminous point of the light source and a principal point of the collimator lens, which results from thermal expansion or thermal contraction of a structure including the light source and the collimator lens due to the temperature change; and (b) an amount of a change in focal length of the collimator lens.

2. The optical pickup according to claim 1, wherein the first astigmatism is generated by utilizing an optical element generating the first astigmatism that has a difference in deformation amount between different directions when the temperature is changed.

3. The optical pickup according to claim 2, wherein the difference in deformation amount between the different directions is generated by making the size of a bonded surface where the optical element generating the first astigmatism is bonded to the supporter different between the different directions.

4. The optical pickup according to claim 2, wherein the difference in deformation amount between the different directions is generated by forming separately provided bonded surfaces where the optical element generating the first astigmatism is bonded to the supporter so that a length between the separately provided bonded surfaces is made different from a size of the bonded surfaces in a direction perpendicular to a direction of the length.

5. The optical pickup according to claim 2, wherein the difference in deformation amount between the different directions is generated by forming separately provided bonded surfaces where the optical element generating the first astigmatism is bonded to the supporter, the separately provided bonded surfaces being different in deformation amount in their height direction when the temperature is changed.

**6.** The optical pickup according to claim 2, 3, 4 or 5, wherein the different directions correspond to a beam shaping direction by the beam shaping element and a direction perpendicular to the beam shaping direction.

**7.** The optical pickup according to any one of the preceding claims, wherein the optical element generating the first astigmatism is a mirror that is provided at a position before or after the parallel light passes through the beam shaping element.

**8.** The optical pickup according to any one of claims 1 to 6, wherein the optical element generating the first astigmatism is the beam shaping element.

**9.** The optical pickup according to any one of claims 1 to 6, wherein the optical element generating the first astigmatism is a plate made up of parallel planes or made up of non-parallel planes, which allow parallel light to pass through.

**10.** The optical pickup according to any one of the preceding claims,
wherein there are a plurality optical elements that generate the first astigmatism, and
each of the plurality of optical elements shares the generation of generating of the first astigmatism.

**11.** An optical pickup, comprising:

a light source;
a collimator lens that collects divergent light from the light source so as to form parallel light;
a beam shaping element that alters an intensity distribution of the parallel light;
an objective lens that collects light passing through the beam shaping element onto an information recording medium; and
a parallel plate that is disposed between the light source and the collimator lens,

wherein an inclination angle of the parallel plate with respect to an optical axis is changed with a variation amount of temperature.

**12.** The optical pickup according to claim 11, wherein the inclination angle of the parallel plate is changed due to thermal deformation of a supporter that supports the parallel plate.

**13.** An optical pickup, comprising: a light source; and a collimator lens that collects divergent light from the light source so as to form parallel light, whereby the light from the light source is collected onto an information recording medium,
wherein the light source and the collimator lens are attached to a base, and
a change in optical relationship concerning image-formation, which is generated from: a change in optical path length between a luminous point of the light source and a principal point of the collimator lens due to a temperature change; and a change in focal length of the collimator lens, is compensated for with a shift of a relative position between the base and at least one of the light source and the collimator lens.

**14.** The optical pickup according to claim 13,
wherein the collimator lens is secured to the base so that positions of the principal point of the collimator lens and the base do not shift relatively when a temperature is changed,
the light source is attached to the base via a supporter, and
the change in optical relationship concerning image-formation is compensated for with a shift of a relative position between the luminous point of the light source and the base, which results from deformation or shift of the supporter due to a temperature change.

**15.** The optical pickup according to claim 13,
wherein the light source is secured to the base so that positions of the luminous point of the light source and the base do not shift relatively when a temperature is changed,
the collimator lens is attached to the base via a supporter, and
the change in optical relationship concerning image-formation is compensated for with a shift of a relative position between the principal point of the collimator lens and the base, which results from deformation or shift of the supporter due to a temperature change.

**16.** The optical pickup according to claim 13,
wherein the light source and the collimator lens are each secured to the base via a supporter, and
the change in optical relationship concerning image-formation is compensated for with: a shift of a relative position between the luminous point of the light source and the base, which results from deformation or shift of the supporter of the light source due to a temperature change; and a shift of a relative position between the principal point of the collimator lens and the base, which results from deformation or shift of the supporter of the collimator lens due to a temperature change.

**17.** An optical pickup, comprising:

a light source;
a collimator lens that collects divergent light from the light source so as to form parallel light;
a beam shaping element that alters an intensity distribution of the parallel light;
an objective lens that collects light passing through the beam shaping element onto an information recording medium; and
a phase plate with concentric steps, the phase plate being disposed at a position before or after the collimator lens,

wherein the phase plate is designed so as to correct a phase distribution of light that is generated due to a temperature change in a structure including the light source and the collimator lens into a state before the light enters the beam shaping element to be converted back into a plane wave.

**18.** The optical pickup according to claim 17,
wherein the phase plate is a stepped plate that allows a phase of light to change from inside to outside in accordance with a change in wavelength due to a change in temperature of the light source, a center of the concentric circles coinciding with a center of an optical axis, and
a step height of each step allows the phase of light to shift by an integral multiple of the wavelength with respect to a certain degree of temperature.

**19.** The optical pickup according to claim 17,
wherein the phase plate is a stepped plate that allows a phase of light to change from inside to outside in accordance with a change in wavelength due to a change in temperature of the light source, a center of the concentric circles coinciding with a center of an optical axis, and
a length Ri from the center of the phase plate to the i-th step is represented by the following formula:

$$Ri = f \times (1 - (1 - 2 \times N \times i / 1000 / \delta)^2)^{1/2}$$

wherein f denotes a focal length of the collimator lens in an initial state, $\delta$ is a difference between an amount of a change in optical path length between a luminous point of the light source and the collimator lens and an amount of a change in focal length of the collimator lens with respect to a temperature change $\Delta T$ that corresponds to a change in wavelength of the light source by 1 nm, and N and i are integers of 1 or more.

**20.** The optical pickup according to claim 17,
wherein the phase plate is a stepped plate that allows a phase of light to change from inside to outside in accordance with a change in wavelength due to a change in temperature of the light source, a center of the concentric circles coinciding with a center of an optical axis,
a step height Dp of each step is represented by the following formula:

$$Dp = N \cdot \lambda / (n - 1)$$

wherein $\lambda$ denotes a wavelength of the light source in an initial state, n denotes a refractive index of the phase plate, and N is an integer of 1 or more, and
a length Ri from the center of the phase plate to the i-th step is represented by the following formula:

$$Ri = f \times (1 - (1 - 2 \times N \times i / 1000 / \delta)^2)^{\frac{1}{2}}$$

wherein f denotes a focal length of the collimator lens in an initial state, $\delta$ is a difference between an amount of a change in optical path length between a luminous point of the light source and the collimator lens and an amount of a change in focal length of the collimator lens with respect to a temperature change $\Delta T$ that corresponds to a change in wavelength of the light source by 1 nm, and N and i are integers of 1 or more.

**21.** The optical pickup according to any one of claims 17 to 20, wherein the collimator lens and the phase plate are integrated.

FIG. 1

EP 1 453 045 A2

FIG. 2A

FIG. 2B

FIG. 3

EP 1 453 045 A2

FIG. 4

FIG. 5

FIG. 6

FIG. 7

FIG. 8A

FIG. 8B

FIG. 8C

FIG. 8D

FIG. 9A

C3 A3 (F40)    93    92 B3

91    95    94

C3

ΔF40    L40 (F40)

L41

FIG. 9B

93    L9    D4

B3    95B

92

D4

FIG. 9C

98    93

96    97

B3

92

FIG. 9D

93

93A
M3
T3
99
92
B3
T4
93A
M3

FIG. 9E

L9
93
B3
S
U
92
101
U
100
L13 L12

FIG. 10A

FIG. 10B

FIG. 11

EP 1 453 045 A2

FIG. 12